# EUROPEAN PATENT APPLICATION

(11) **EP 2 072 927 A1**
(43) Date of publication of application: **24.06.2009**
(21) Application number: 07807145.3
(22) Date of filing: 12.09.2007
(51) Int. Cl.: F24F 13/28, B01D 46/10

(54) **AIR CONDITIONER**

(30) Priority: 15.09.2006 JP 2006251472
(71) Applicant: Daikin Industries, Ltd., Osaka-shi, Osaka 530-8323 (JP)
(72) Inventor: MATSUBARA, Atsushi, Kusatsu-shi Shiga 525-8526 (JP)
(74) Representative: Siegert, Georg
(86) International application number: PCT/JP2007/067738
(87) International publication number: WO 2008/032740

(57) **Abstract**

Adequate mounting of a dust box is ensured, problems resulting from inadequate mounting of the dust box are prevented, and an adequate air conditioning operation and cleaning operation are achieved. In an air conditioner comprising an air conditioning mechanism (X) and a cleaning mechanism (Y) for brushing off dust adhered to the surface of filters (13) and collecting the dust in a dust box (20), the dust box (20) can be attached to and removed from a storage part (30) on a casing (1), and mounting detection means (P) for detecting that the dust box (20) is adequately mounted are provided between the dust box (20) and the storage part (30). According to this configuration, the mounting detection means (P) detects that the dust box (20) is not mounted or is incompletely mounted, and an operator can quickly and reliably mount the dust box (20) by confirming detection information. As a result, the cleaning operation and air conditioning operation are reliably prevented from being performed when the dust box is not mounted or is incompletely mounted, and the reliability of the operations of the air conditioner is improved.

## Description

### TECHNICAL FIELD

The present invention relates to an air conditioner wherein a filter-cleaning mechanism is added to an air-conditioning mechanism.

### BACKGROUND ART

There are conventionally known air conditioners provided with a cleaning mechanism that automatically cleans a filter (see Patent Document 1). The filter-cleaning mechanism in this type of air conditioner is designed so that a plate-shaped filter disposed to be capable of moving back and forth along the internal surfaces of an air intake port is made to pass through a dust box disposed in the movement pathway of the filter, and dust adhered to the front surface of the filter is brushed off by a brush disposed on both the front and rear sides of the filter in the dust box, whereby the functionality of the filter is restored.

In this case, after being cleaned by the back-and-forth movement, not setting the filter in an adequate position when cleaning is complete creates a concern that, for example, air that circumvents the filter (i.e., dust-contaminated air) will be drawn into the heat exchanger, and that this air will be discharged as conditioned air into the room, compromising the indoor environment. To prevent this from occurring, a limit switch for detecting the placement position of the filter is provided, ensuring that the air conditioning operation is performed while the filter is placed in an optimal position.
< Patent Document 1 > Japanese Laid-open Patent Application No. 2004-101101

### DISCLOSURE OF THE INVENTION

### <Technical Problem>

The dust box is designed so as to be able to be removed from the casing of the air conditioner (indoor unit) to the exterior. The dust box is removed from the casing when dust has accumulated and the dust is to be disposed of, and the dust box is then mounted back onto the casing.

In this case, for example, if the operator forgets to remount the dust box and the cleaning operation is performed while the dust box is not mounted, there is a danger that the dust collected in the filter will scatter out peripherally along with the movement of the filter, compromising the indoor environment.

If the dust box is mounted but the mounting is not adequate or is incomplete, there is a danger that the dust brushed off of the filter will scatter into the room from the space between the dust box and the casing, compromising the indoor environment. Furthermore, it is believed that even the cleaning mechanism itself could be damaged, depending on the situation.

If the air conditioning operation is performed while the dust box is not mounted in an adequate position, it is believed, for example, that in a structure in which the discharge port is provided to the closest position to the dust box, the flow of discharged air will change depending on the presence of the dust box, and condensation, noise, or the like will occur. It is also believed that in a structure in which the dust box is disposed in proximity to the intake port, the flow of intake air will change depending on the presence of the dust box, and increases in intake resistance, noise, or the like will occur.

However, a conventional air conditioner may be provided with means for detecting the mounted state of the filter as described above, but is not provided with means for detecting the mounted position of the dust box, and problems may therefore occur as a result of the dust box being inadequately mounted as described above.

In view of this, the present invention was designed in order to ensure adequate mounting of the dust box, preventing problems resulting from inadequate mounting of the dust box, and achieving an adequate air conditioning operation and cleaning operation.

### <Solution to Problem>

The following configurations are used in the present invention as specific means for resolving the pertinent problems.

An air conditioner according to a first aspect of the present invention is an air conditioner comprising, within a ventilation duct extending from an intake port 3 to a discharge port 4 formed in a casing 1, an air conditioning mechanism X in which a heat exchanger 7 and a fan 8 are disposed, and a cleaning mechanism Y whereby dust adhered to the surfaces of plate-shaped filters 13 disposed along the internal surface of the intake port 3 is collected in a dust box 20; wherein the dust box 20 is configured to be capable of being attached to and removed from a storage part 30 on the casing 1, and mounting detection means P for detecting that the dust box 20 has been adequately mounted in the storage part 30 are provided between the dust box 20 and the storage part 30.

An air conditioner according to a second aspect of the present invention is the air conditioner according to the first aspect of the present invention, wherein the dust box 20 has an oblong shape so as to be able to correspond with the entire widthwise area of the filters 13, and the mounting detection means P are disposed at both widthwise sides of the dust box 20.

An air conditioner according to a third aspect of the present invention is the air conditioner according to the first or second aspect of the present invention, wherein the mounting detection means P are configured to output an electrical detection signal when adequate mounting of the dust box 20 is detected.

An air conditioner according to a fourth aspect of the present invention is the air conditioner according to any of the first through third aspects of the present invention, comprising operation restriction means for restricting the air conditioning operation and/or cleaning operation, the air conditioner being configured so that the operation restriction means are actuated to restrict the start of the air conditioning operation and/or cleaning operation in a case in which the detection signal has not been input from the mounting detection means P at the start of the air conditioning operation and/or cleaning operation.

An air conditioner according to a fifth aspect of the present invention is the air conditioner according to any of the first through third aspects of the present invention, comprising irregularity notification means for making notification of irregularities in the mounted state in a case in which the detection signal has not been input from the mounting detection means P at the start of the air conditioning operation and/or cleaning operation.

An air conditioner according to a sixth aspect of the present invention is the air conditioner according to any of the first through third aspects of the present invention, comprising operation interruption means for interrupting the air conditioning operation and/or cleaning operation, the air conditioner comprising the operation interruption means being actuated to interrupt the air conditioning operation and/or cleaning operation in a case in which the input of the detection signal from the mounting detection means P ceases during the air conditioning operation and/or cleaning operation.

An air conditioner according to a seventh aspect of the present invention is the air conditioner according to any of the first through third aspects of the present invention, comprising irregularity notification means for making notification of an irregularity in the mounted state in a case in which the input of the detection signal from the mounting detection means P ceases during the air conditioning operation and/or cleaning operation.

An air conditioner according to an eighth aspect of the present invention is the air conditioner according to the sixth or seventh aspect of the present invention, comprising the air conditioning operation and/or cleaning operation being restarted or the irregularity notification being ended when the detection signal is again input from the mounting detection means P.

An air conditioner according to a ninth aspect of the present invention is the air conditioner according to the first through third aspects of the present invention, comprising mounting notification means for notifying that the dust box 20 has been adequately mounted in a case in which the detection signal is output from the mounting detection means P following the absence of an output during suspension of the air conditioning operation and/or cleaning operation.

### <Advantageous Effects of Invention>

The following effects are obtained in the present invention.

In the air conditioner according to the first aspect of the present invention, the dust box 20 is configured to be capable of being attached to and removed from the storage part 30 on the casing 1, and mounting detection means P for detecting that the dust box 20 has been adequately mounted in the storage part 30 are provided between the dust box 20 and the storage part 30. Therefore, the mounting detection means P detects cases in which, for example, the dust box 20 is removed, the dust collected in the dust box 20 is disposed of, and the user then forgets to reattach the dust box 20, and cases in which the dust box 20 has been reattached but the attachment is incomplete and the dust box 20 is not adequately mounted.

Therefore, by confirming the detection information of the mounting detection means P, an operator can adequately mount the dust box 20 on the storage part 30 or correct an incomplete mounting into an adequate mounting. As a result, is it possible to prevent situations in which, for example, the indoor environment is adversely affected due to the cleaning operation being started while the dust box is not mounted and the dust collected on the filters scattering out peripherally, situations in which the cleaning mechanism is damaged due to the dust box 20 being mounted incompletely, situations in which condensation or noise occur as a result of the air conditioning operation being performed while the dust box is not mounted, and the like.

In the air conditioner according to the second aspect of the present invention, the dust box 20 has an oblong shape so as to be able to correspond with the entire widthwise area of the filters 13, and the mounting detection means P are disposed at both widthwise sides of the dust box 20. Therefore, in cases in which the dust box 20 is mounted in the storage part 30, the dust box 20 may be mounted nonuniformly at the two widthwise sides because the dust box 20 has an oblong shape. For example, it is possible for one widthwise end of the dust box 20 to be adequately mounted while the mounting at the other end is incomplete. In such cases, the operator can easily and reliably acknowledge this occurrence from the detection information of the mounting detection means P disposed at the two widthwise sides of the dust box 20 and can correct the mounting of the dust box 20 to an adequate state. As a result, the effects described in (a) above can be more reliably achieved.

In the air conditioner according to the third aspect of the present invention, unique effects such as the following are obtained in addition to the effects described in (a) or (b) above. Specifically, in the air conditioner according to the second aspect of the present invention, the mounting detection means P are configured to output an electrical detection signal when adequate mounting of the dust box 20 is detected. Therefore, the detection signal can be input as one control element to the control system of the air conditioning mechanism X and the cleaning mechanism Y, and the operations of these mechanisms can be automatically controlled in correlation with the mounted state of the dust box 20. As a result, the reliability of the operations is improved in an air conditioner equipped with an air conditioning mechanism X and a cleaning mechanism Y.

In the air conditioner according to the fourth aspect of the present invention, unique effects such as follows are obtained in addition to the effects described in (a), (b), and (c) above. Specifically, the air conditioner according to the fourth aspect of the present invention comprises operation restriction means for restricting the air conditioning operation and/or cleaning operation, the air conditioner comprising the operation restriction means being actuated to restrict the start of the air conditioning operation and/or cleaning operation in a case in which the detection signal has not been input from the mounting detection means P at the start of the air conditioning operation and/or cleaning operation. Therefore, the air conditioning operation and/or cleaning operation are reliably restricted from beginning while the dust box 20 is not mounted or is incompletely mounted. For example, it is possible to reliably prevent situations in which the indoor environment is adversely affected due to the cleaning operation being started while the dust box 20 is not mounted and the dust collected on the filters scattering out peripherally, situations in which the cleaning mechanism Y is damaged due to the cleaning operation being started while the dust box 20 is not mounted in the adequate position, situations in which condensation or noise occur as a result of changes in the air flow and of the air conditioning operation being performed while the dust box 20 is not mounted in the adequate position, and the like. As a result, the operability and reliability are further improved in the air conditioning operation and cleaning operation of the air conditioner equipped with the air conditioning mechanism X and the cleaning mechanism Y.

According to the air conditioner of the fifth aspect of the present invention, unique effects such as follows are obtained in addition to the effects described in (a), (b), or (c) above. Specifically, since the air conditioner according to the fifth aspect of the present invention comprises irregularity notification means for making notification of irregularities in the mounted state in a case in which the detection signal has not been input from the mounting detection means P at the start of the air conditioning operation and/or cleaning operation, the operator can easily and reliably recognize that the dust box 20 is not mounted or is mounted incompletely before initiating the air conditioning operation and/or cleaning operation, and can immediately perform an operation for correcting the mounted state of the dust box 20 on the basis of this recognition. Therefore, further improvement in the reliability of the operation of the air conditioner can be expected. The irregularity notification in the irregularity notification means can be, for example, in the form of sound, light, a written display, or the like; and any of these forms of notification are highly recognizable.

In the air conditioner according to the sixth aspect of the present invention, unique effects such as follows are obtained in addition to the effects described in (a), (b), or (c) above. Specifically, the air conditioner according to the sixth aspect of the present invention comprises operation interruption means for interrupting the air conditioning operation and/or cleaning operation, and comprises the operation interruption means being actuated to interrupt the air conditioning operation and/or cleaning operation in a case in which the input of the detection signal from the mounting detection means P ceases during the air conditioning operation; i.e., in cases in which either the dust box 20 is removed during the air conditioning operation, or the adequately mounted dust box 20 is for some reason misaligned from its position into an incomplete mounting, and the detection signal accordingly ceases to be output from the mounting detection means P. Therefore, situations in which the air conditioning operation and/or cleaning operation are continued while the dust box 20 is not mounted or is incompletely mounted are reliably prevented and, as a result, the reliability of the air conditioner during the air conditioning operation and cleaning operation is further improved.

In the air conditioner according to the seventh aspect of the present invention, unique effects such as follows are obtained in addition to the effects described in (a), (b), or (c) above. Specifically, in the air conditioner according to the seventh aspect of the present invention, the irregularity notification means operates and a notification is made of an irregularity in the mounted state of the dust box 20 in a case in which the input of the detection signal from the mounting detection means P ceases during the air conditioning operation and/or cleaning operation; i.e., in cases in which either the dust box 20 is removed during the air conditioning operation, or the adequately mounted dust box 20 is for some reason misaligned from its position into an incomplete mounting, and the detection signal accordingly ceases to be output from the mounting detection means P. Therefore, by confirming the specifics of the irregularity notification, the operator can immediately take the necessary action, e.g., the operator can suspend the air conditioning operation, confirm and correct the mounted state of the dust box 20, and bring the dust box 20 to an adequate mounted state. Situations in which the air conditioning operation is continued while the dust box 20 is not mounted or is incompletely mounted are reliably prevented and, as a result, the reliability of the air conditioner during the air conditioning operation and cleaning operation is further improved.

In the air conditioner according to the eighth aspect of the present invention, unique effects such as follows are obtained in addition to the effects described in (f) or (g) above. Specifically, since the air conditioner according to the eighth aspect of the present invention is configured so that the air conditioning operation and/or cleaning operation are restarted or the irregularity notification is ended when the detection signal is again input from the mounting detection means P, the restarting of the air conditioning operation and/or cleaning operation and the ending of the irregularity detection are both performed smoothly after the dust box 20 has been adequately mounted, and the operability of the air conditioner is improved proportionately.

In the air conditioner according to the ninth aspect of the present invention, unique effects such as follows are obtained in addition to the effects described in (a), (b), or (c) above. Specifically, the air conditioner according to the ninth aspect of the present invention comprises mounting notification means for notifying of cases in which the detection signal is output from the mounting detection means P following the absence of an output during suspension of the air conditioning operation and/or cleaning operation; i.e., cases in which the dust box 20 has been adequately mounted. Therefore, in cases in which the dust box 20 is remounted after the dust box 20 is removed and dust collected therein is disposed of while the air conditioning operation and cleaning operation have been suspended, notification is made of the adequate mounting of the dust box 20 by means of, e.g., illumination of a main operation lamp, the emission of a warning sound or the like, on the basis of the function of the mounting notification means. Therefore, by confirming the notification information, the operator can immediately restart operations without reconfirming the mounted state of the dust box 20 when restarting the air conditioning operation and/or cleaning operation, and the operability of the air conditioner is accordingly improved.

### BRIEF DESCRIPTION OF THE DRAWINGS

FIG. 1 is an external perspective view of the air conditioner according to an embodiment of the present invention.
FIG. 2 is an enlarged cross-sectional view of II-II in FIG. 1.
FIG. 3 is an external perspective view of the air conditioner shown in FIG. 1 with the casing removed.
FIG. 4 is an enlarged cross-sectional view of section IV in FIG. 2.
FIG. 5 is a perspective view of a filter used in the filter cleaning unit.
FIG. 6 is an external perspective view of the brush mechanism shown in FIG. 1.
FIG. 7 is a view along arrow VII-VII in FIG. 6.
FIG. 8 is an external perspective view of the first box constituting the dust box.
FIG. 9 is an external perspective view of the second box constituting the dust box.

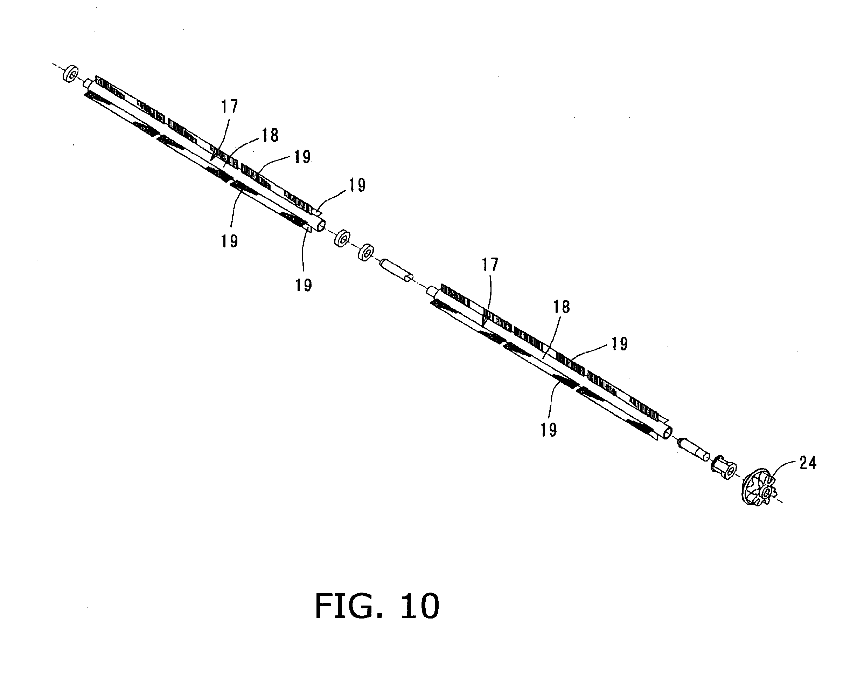

FIG. 10 is a structural view of the cleaning brush provided to the brush mechanism.
FIG. 11 is a partial structural view of the dust box as being mounted on the air conditioner.
FIG. 12 is a partial structural view of the initial step of removing the dust box from the state shown in FIG. 11.
FIG. 13 is a partial structural view of a state in which the dust box has been removed from the air conditioner.
FIG. 14 is a function block diagram of the air conditioner shown in FIG. 1.
FIG. 15 is a control flowchart of the air conditioner shown in FIG. 1.

### EXPLANATION OF THE REFERENCE NUMERALS/SYMBOLS/SIGNS

- 1: Casing
- 3: Intake port
- 4: Discharge port
- 7: Heat exchanger
- 8: Fan
- 13: Filter
- 30: Storage part
- P: Mounting detection means
- Q: Brush mechanism
- X: Air conditioning mechanism
- Y: Cleaning mechanism
- Z: Air conditioner

### BEST MODE FOR CARRYING OUT THE INVENTION

The present invention is described in detail hereinbelow with reference to preferred embodiments.

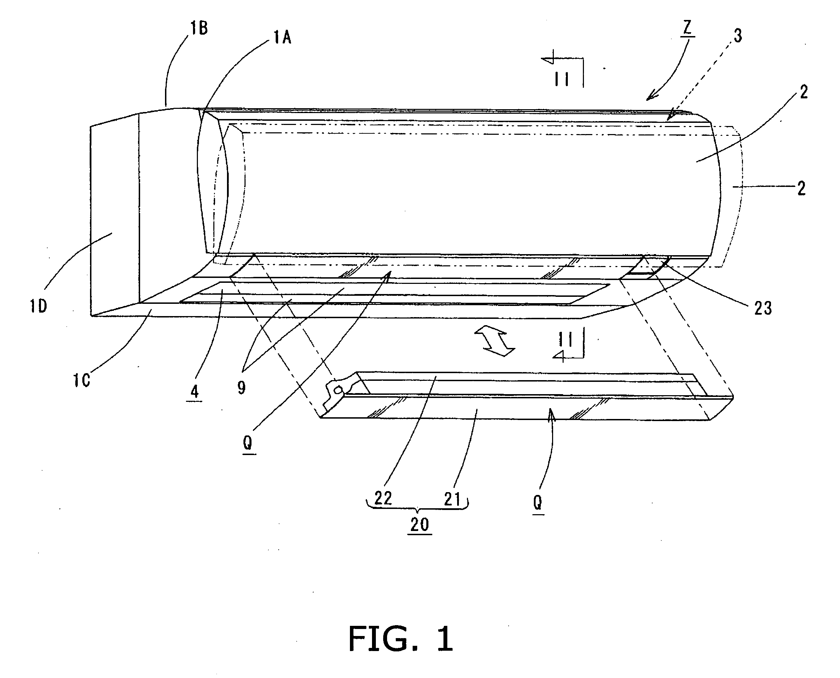

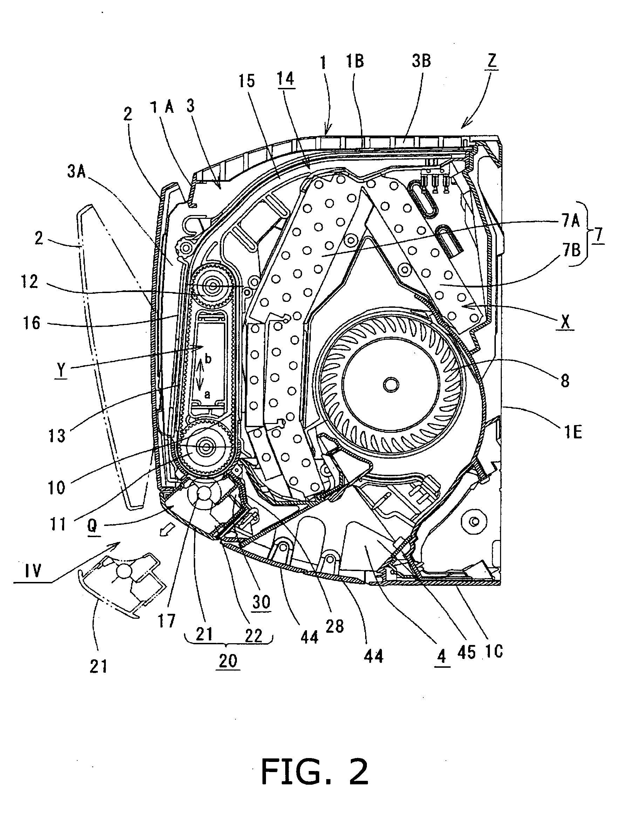

An air conditioner Z according to an embodiment of the present invention is shown in FIGS. 1 and 2. The air conditioner Z comprises an oblong box-shaped casing 1 attached to an indoor wall surface, the casing being an indoor unit of a separated-type air conditioner. A front-side intake port 3A and a top-side intake port 3B are provided respectively to a front-side wall 1A and a top-side wall 1B of the casing 1. A front-side panel 2 is provided to the front side of the front-side intake port 3A.

The front-side panel 2 can be opened and closed between a closed position in which the front-side panel 2 approaches the front-side intake port 3A and obscures the front-side intake port 3A from view as shown by the solid lines in FIGS. 1 and 2, and a forward-inclined open position in which the top end of the panel leans forward as the panel moves downward from the closed position, as shown by the dashed lines in the same drawings. The front-side panel 2 is configured so as to open the front-side intake port 3A in the open position.

An oblong open discharge port 4 is provided in a anteropostorioly central position in a bottom-side wall 1C of the casing 1, and the discharge port 4 is provided with a horizontal flap 44 and a vertical flap 45.

Furthermore, a brush mechanism Q comprising a dust box 20, described hereinafter, is detachably mounted inside a storage part 30 provided at a position in front of the discharge port 4 of the casing 1 and near the bottom end of the front-side wall 1A.

A heat exchanger 7 and a fan 8 are housed in a ventilation duct that extends from the intake port 3 in the casing 1 to the discharge port 4, thereby constituting an air conditioning mechanism X, as shown in FIG. 2. The heat exchanger 7 has a substantially peaked bent shape composed of a first heat exchanger 7A separated from and facing the intake port 3 and extending vertically, and a second heat exchanger 7B connected to the top end of the first heat exchanger 7A and inclined downward therefrom toward a rear-side wall 1E.

A cleaning mechanism Y, described next, is disposed in a front-side space between the front-side intake port 3A of the casing 1 and the front surface of the first heat exchanger 7A, and a top-side space between the top-side intake port 3B and the top part of the first heat exchanger 7A and second heat exchanger 7B. The cleaning mechanism Y spans both these spaces.

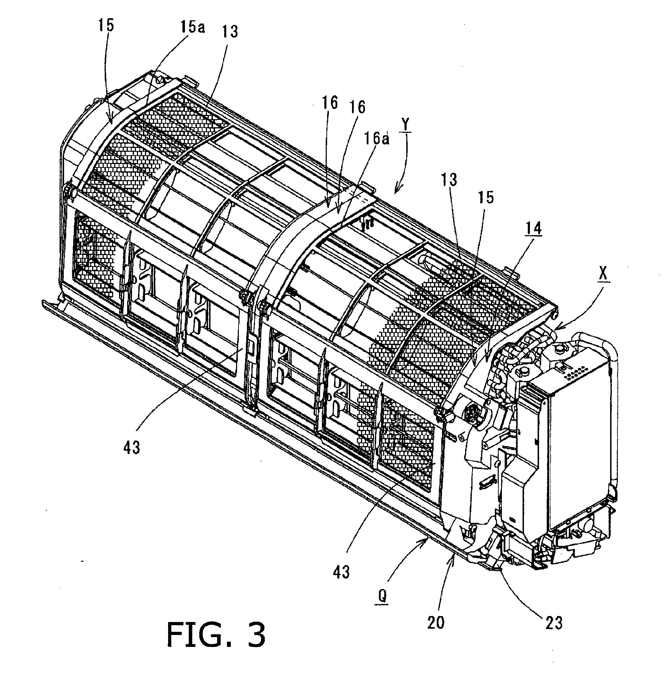

The cleaning mechanism Y comprises a cleaning unit casing 14 having a curved shaped as seen from the side, so as to curve along the inside surface of the top-side intake port 3B from the front-side intake port 3A of the casing 1, as shown in FIGS. 2 and 3. The cleaning unit casing 14 has an oblong frame shape, and the casing is fixed in place on the casing 1. The cleaning unit casing 14 comprises a pair of left and right side walls 15, 15 and middle walls 16 positioned in the middle between the opposing side walls 15, 15, and has a frame shape in which the side walls 15, 15 and the middle walls 16 are connected and integrated together by a lattice.

Guide grooves 15a, 16a are provided respectively to the side edges of the top-side portions of the side walls 15, 15 and middle walls 16 of the cleaning unit casing 14, the top-side portions corresponding to the top-side intake port 3B of the casing 1. Frame-shaped filter restraints 43 are attached to the front-side portion of the cleaning unit casing 14 corresponding to the front-side intake port 3A of the casing 1 so as to cover the front-side portion from the external side (the front side), and the filter restraints 43 are attached to be capable of rotating in the front-back direction around the top edges of the filter restraints 43.

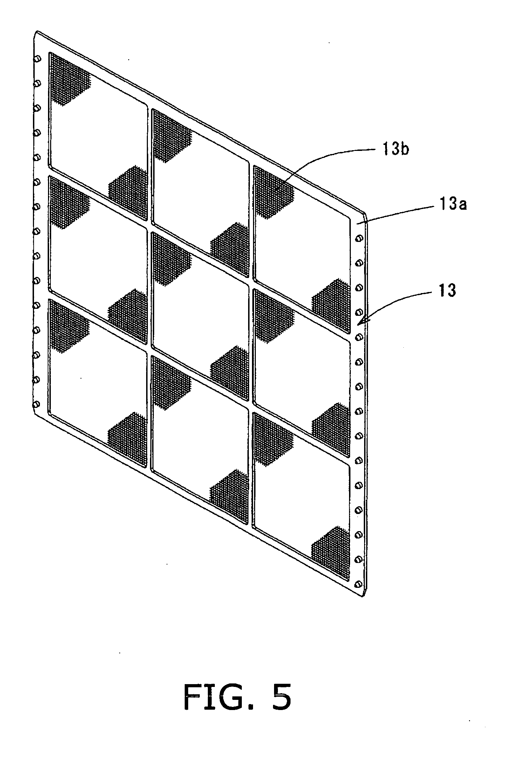

Plate-shaped filters 13, each formed by placing filter materials 13b on the insides of a latticed frame 13a as shown in FIG. 5, are disposed on the external side of the cleaning unit casing 14, between the guide groove 15a of one side wall 15 and a guide groove 16a of one middle wall 16, and also between the guide groove 15a of the other side wall 15 and the guide groove 16a of the other middle wall 16. The filters 13 are disposed to be capable of moving along the direction of curvature of the cleaning unit casing 14. The filters 13 are prevented from lifting upward by the filter restraints 43 in the front-side portion of the cleaning unit casing 14.

The filters 13 are each interlocked with a belt 10 stretched around a first pulley 11 and a second pulley 12 disposed in parallel and vertically separated from each other in the front-side portion of the cleaning unit casing 14, as shown in FIG. 2, and the filters 13 are moved integrally with the travelling of the belts 10.

Specifically, the filters 13 are essentially disposed so that the rear ends of the filters 13 are positioned at the rear ends of the cleaning unit casing 14, and the front ends of the filters 13 are positioned in proximity to the first pulleys 11, as shown in FIGS. 2 and 3. This placement is used during the usual air conditioning operation, and is hereinbelow referred to as the "first filter position."

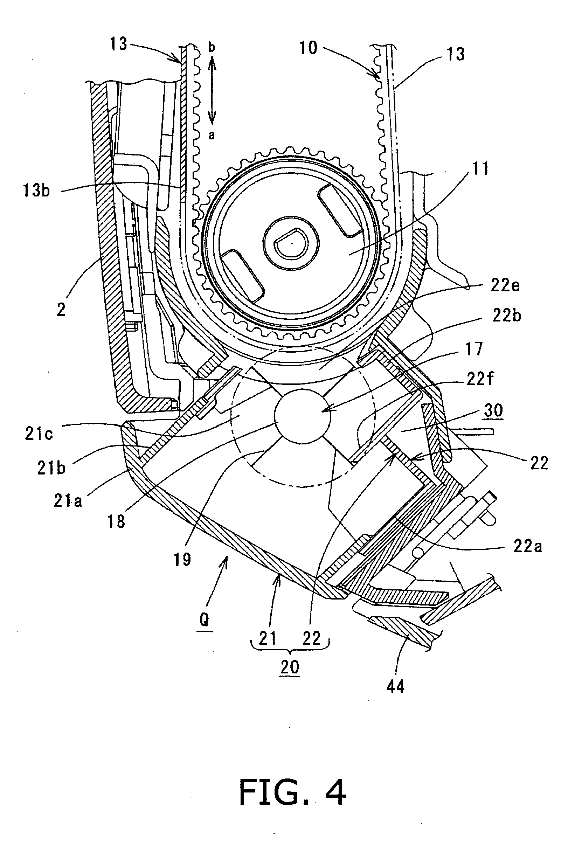

During the cleaning operation to clean the filters 13, the first pulleys 11 are rotated forward, the belts 10 are caused to travel in the direction of the arrow a shown in FIGS. 2 and 4, and the filters 13 are drawn together with the belts 10 from the "first filter position" going around the external sides of the first pulleys 11 to the second pulleys 12, as shown by the dashed lines in FIG. 4. The position of the filters 13 at this time is referred to as the "second filter position." The reverse rotation of the first pulleys 11 and the travelling of the belts 10 in the direction of the arrow b shown in FIGS. 2 and 4 cause the filters 13 to return from the "second filter position" to the "first filter position" together with the belts 10.

When the filters 13 move back and forth between the "first filter position" and the "second filter position" in this manner, dust that has collected on the surfaces of the filters 13 is brushed off by the brush mechanism Q, described next, and the dust collection functionality of the filters 13 is restored.

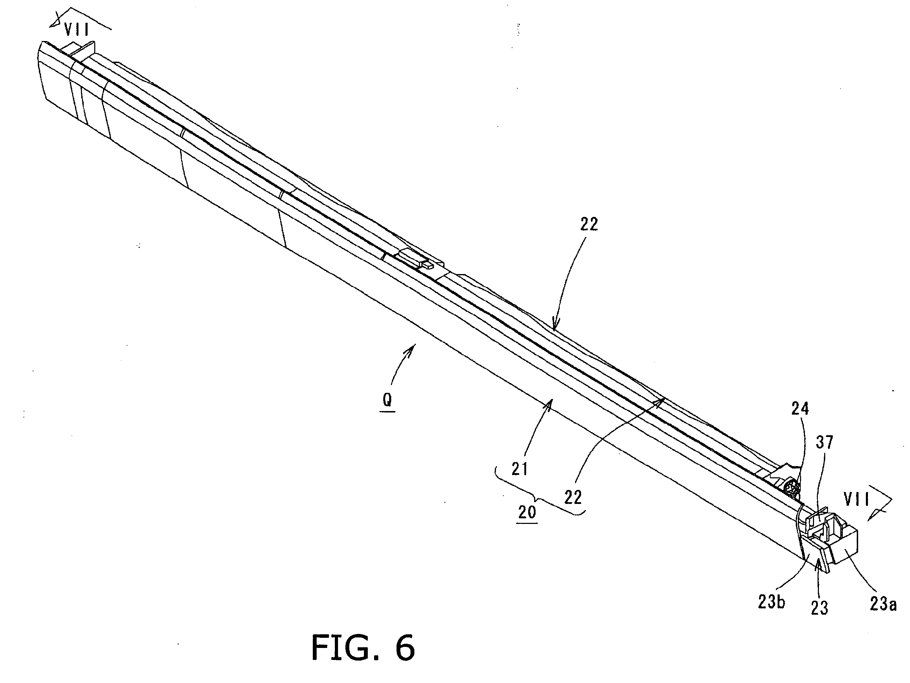

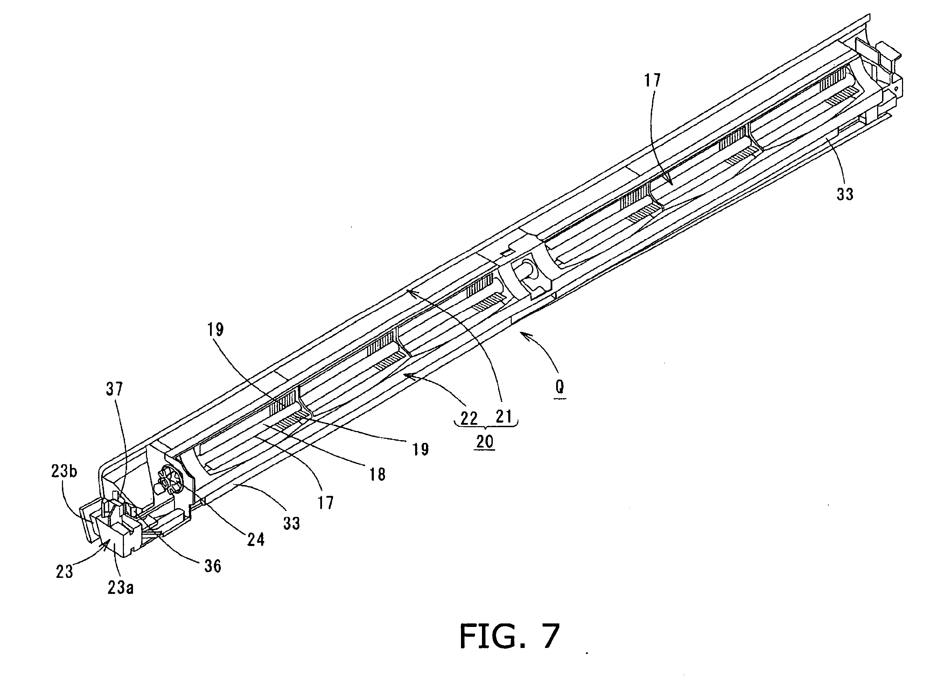

The brush mechanism Q fulfils the purpose of the present invention, and the brush mechanism Q is removably attached to the storage part 30 provided to the front end portion of the bottom-side wall 1C of the casing 1, as shown in FIGS. 1 through 4. The brush mechanism Q is configured with a cleaning brush 17 mounted inside the dust box 20, which is composed of a first box 21 and a second box 22, as shown in FIGS. 6 and 7.

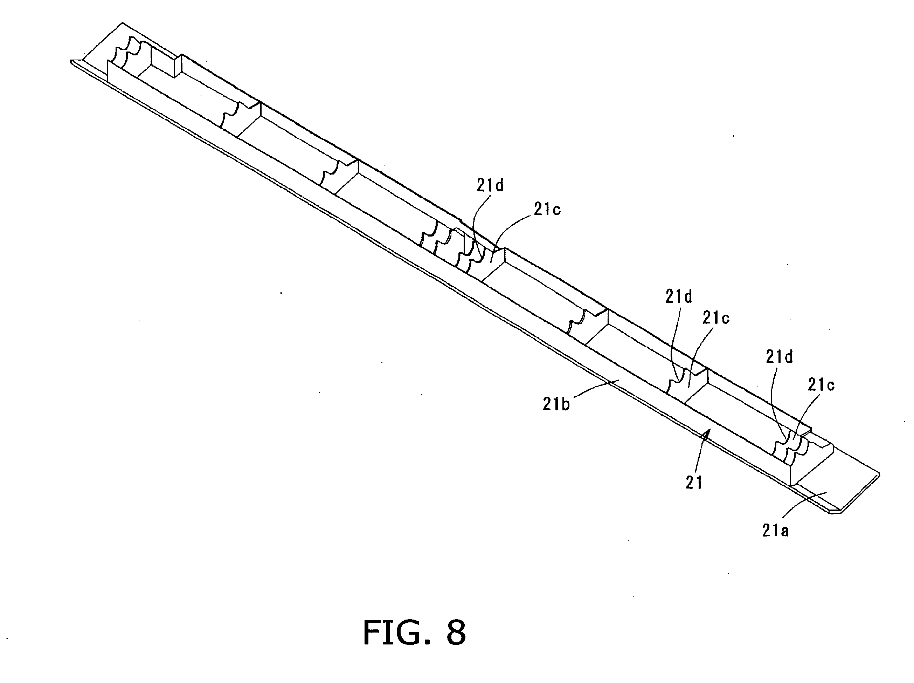

The first box 21 comprises an oblong and substantially flat plate-shaped base member 21a, a peripheral wall 21b provided along the external peripheral shape of the base member 21a so as to enclose the base member, and a plurality of ribs 21c provided inside the peripheral wall 21b so as to partition the peripheral wall 21b in the longitudinal direction, as shown in FIGS. 4 and 8. Support parts 21d for supporting the cleaning brush 17, described hereinafter, are formed in the ribs 21 c.

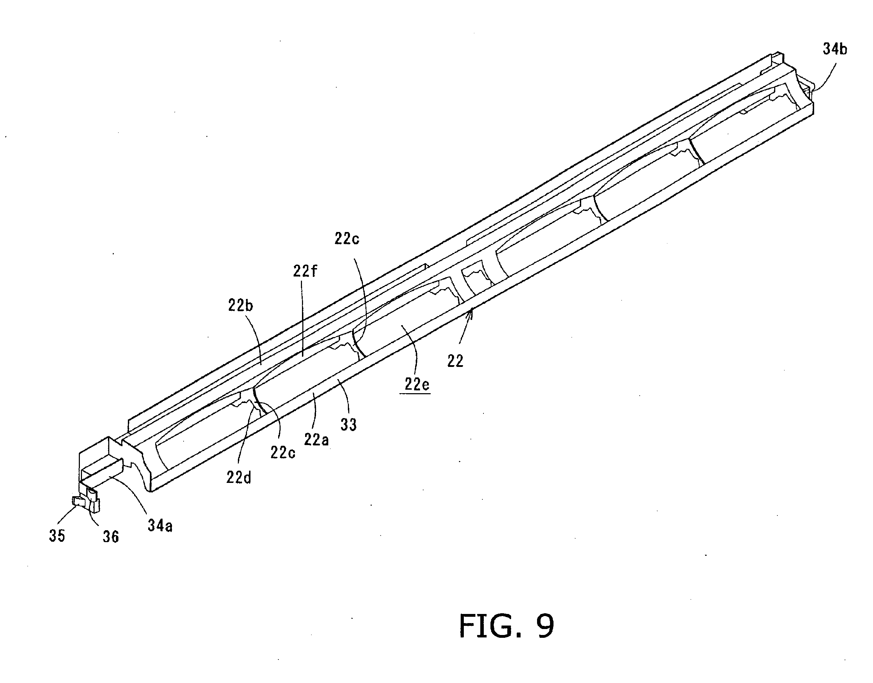

The second box 22 comprises a peripheral wall 22a having a flat surface shape that corresponds to the peripheral wall 21b of the first box 21, a top wall 22b provided along one of the lengthwise portions of the peripheral wall 22a, and a plurality of ribs 22c provided inside the peripheral wall 22a so as to correspond to the ribs 21 c of the first box 21, as shown in FIGS. 4 and 9. Support parts 22d for supporting the cleaning brush 17, described hereinafter, are formed in the ribs 22c.

Therefore, in the top side of the second box 22, openings 22e enclosed by the other lengthwise portion of the peripheral wall 22a, the edge of the top wall 22b, and the ribs 22c are aligned along the longitudinal direction of the second box 22. In this case, the side edge of the top wall 22b facing the each opening 22e is formed into an arcuate shape recessed so as to avoid interference with the filters 13.

Furthermore, a lever contact part 34a is provided at one longitudinal end of the second box 22, and a lever contact part 34b is provided at the other end. A catch piece 35 and a latching protuberance 36 are formed at the side of the lever contact part 34a at one end. The lengthwise portion of the peripheral wall 22a nearer to the openings 22e also functions as a limit contact part 33, as is described hereinafter.

The cleaning brush 17 is configured by attaching brushes 19 at four positions in the circumferential direction on the external peripheral surface of a brush shaft 18, so that the brushes 19 extend in the axial direction of the brush shaft 18. In this case, the axial length of the cleaning brush 17 is set in this embodiment to a dimension substantially half of the longitudinal dimension of the dust box 20, and two cleaning brushes 17, 17 are connected on the same axis and used as such.

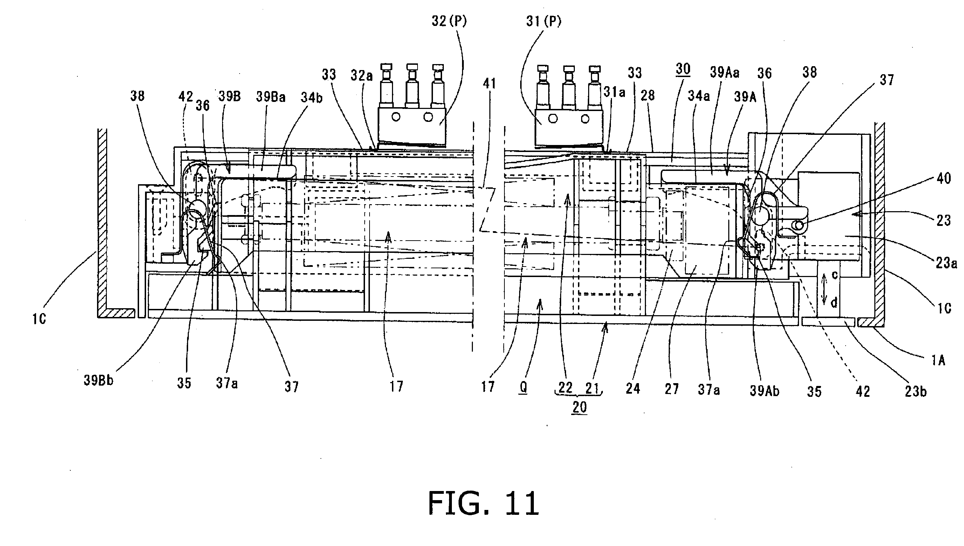

The pair of cleaning brushes 17, 17 configured in this manner is fitted between the first box 21 and second box 22 of the dust box 20, and is rotatably supported by the ribs 21c on the side of the first box 21 and the ribs 22c on the side of the second box 22, as shown in FIG. 7. A brush drive gear 24 provided at one axial end of the cleaning brush 17 is rotatably driven by a brush drive motor 27 (see FIG. 11).

A pushbutton 23 is shown in FIGS. 6 and 7 at one end of the dust box 20 (the side where the catch piece 35 and latching protuberance 36 are provided), but this pushbutton 23 is attached to the storage part 30 as is described hereinafter, and is illustrated herein for descriptive purposes in order to clarify the positional relationship with the brush mechanism Q.

FIG. 4 shows a state in which the brush mechanism Q is mounted in the storage part 30 on the casing 1. In this state, the openings 22e in the dust box 20 on the side of the second box 22 face the belts 10 wrapped around the first pulleys 11, the rotational path of the cleaning brush 17 extends upward through the openings 22e, and the highest point of the rotational path substantially coincides with the lowest point of the external surfaces of the belts 10.

Therefore, during the cleaning operation, the filters 13 circumvent the external peripheries of the first pulleys 11 together with the belts 10 wrapped around the first pulleys 11, and move back and forth between the "first filter position" and the "second filter position." The cleaning brush 17 is rotated at this time, whereby the surfaces of the filters 13 are brushed by the brushes 19 of the cleaning brush 17, and dust collected on the surfaces of the filters 13 is brushed off into the dust box 20. As a result, the surfaces of the filters 13 are cleaned, and the dust collection functionality is restored.

In this case, the rotational path of the cleaning brush 17 overlaps with the distal end portions of protruding ribs 22f provided to the second box 22 as shown in FIG. 4. Therefore, the distal end portions of the brushes 19 come into contact with the protruding ribs 22f when the cleaning brush 17 rotates, and dust adhering to the brushes 19 is scraped off. As a result, the brushing functionality of the brushes 19 is restored to prevent situations in which, e.g., the dust brushed off the filters 13 by the brushes 19 remains on the brushes 19 and adheres again to the portions of the filters 13 that have already been cleaned.

A condition of this operation of the brush mechanism Q cleaning the filters 13 is that the brush mechanism Q be mounted in an adequate position within the storage part 30, as shown in FIG. 4. Therefore, this embodiment includes a configuration for mounting and holding the brush mechanism Q in an adequate position, as well as a configuration for confirming that the dust box 20 is mounted in an adequate position, as is described next. This is described in detail hereinbelow with reference to FIGS. 11 through 13.

FIG. 11 shows a state (i.e., the state shown in FIG. 4) in which the brush mechanism Q is adequately mounted in the storage part 30 formed by a dust box holder 28 on the casing 1. In this embodiment, a pair of left and right locking levers 39A, 39B is provided to the dust box holder 28.

The right locking lever 39A has a substantial L shape and is turnably attached to the dust box holder 28 by a fulcrum pin 38. One end of the right locking lever 39A is a contact part 39Aa, and the distal end portion of the other end is a hook 39Ab. The locking lever 39A is engaged via an engaging pin 40 with a main body 23a of the pushbutton 23 provided to the dust box holder 28. The pushbutton 23 is configured so that pushing on a pressing part 23b displaces the entire pushbutton in the direction of the arrow c relative to the dust box holder 28, and releasing the pressure on the pressing part 23b causes the pushbutton to automatically return in the direction of the arrow d.

The pushbutton 23 is set so that when the pushbutton is in the initial state in which no pressure is being applied (the state shown in FIG. 11), the surface of the pressing part 23b is positioned in substantially the same position as the front-side wall 1A of the casing 1. When the pushbutton 23 is in the initial state, the position of the locking lever 39A relative to the pushbutton 23 and dust box 20 is set so that the contact part 39Aa is in proximity to the lever contact part 34a of the brush mechanism Q on the side of the dust box 20, and the hook 39Ab interlocks with the catch piece 35 on the side of the dust box 20.

Therefore, in this state, the locking lever 39A does not push the brush mechanism Q out of the storage part 30, but rather holds the brush mechanism Q in the current mounted state by the interlocking of the hook 39Ab and the catch piece 35. In this case, an engaging part 37a of a spring 37 on the dust box holder 28 is disengaged from the latching protuberance 36 on the side of the dust box 20.

The left locking lever 39B has a substantial L shape and is rotatably attached to the dust box holder 28 by a fulcrum pin 38. One end of the left locking lever 39B is a contact part 39Ba, and the distal end portion of the other end is a hook 39Bb.

In the initial state in which the pushbutton 23 is not being operated, the position of the locking lever 39B relative to the dust box 20 is set so that the contact part 39Ba is in proximity to the lever contact part 34b of the brush mechanism Q on the side of the dust box 20, and the hook 39Bb interlocks with the catch piece 35 on the side of the dust box 20. Therefore, in this state, the locking lever 39B does not push the brush mechanism Q out of the storage part 30, but rather holds the brush mechanism Q in the current mounted state by means of the interlocking between the hook 39Bb and the catch piece 35, as is the case with the right locking lever 39A. In this case, the engaging part 37a of the spring 37 on the dust box holder 28 is disengaged from the latching protuberance 36 on the side of the dust box 20.

A lever 42 attached to the left locking lever 39B is linked via a linking bar 41 with a lever 42 attached to the right locking lever 39A, and the left locking lever 39B is designed to operate synchronously and in conjunction with the operation of the right locking lever 39A, based on the operation of the pushbutton 23.

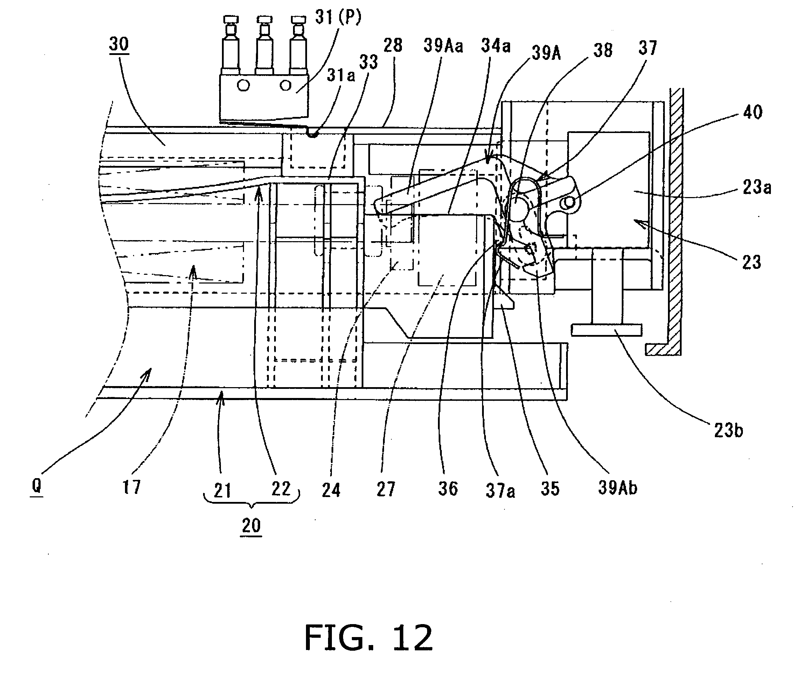

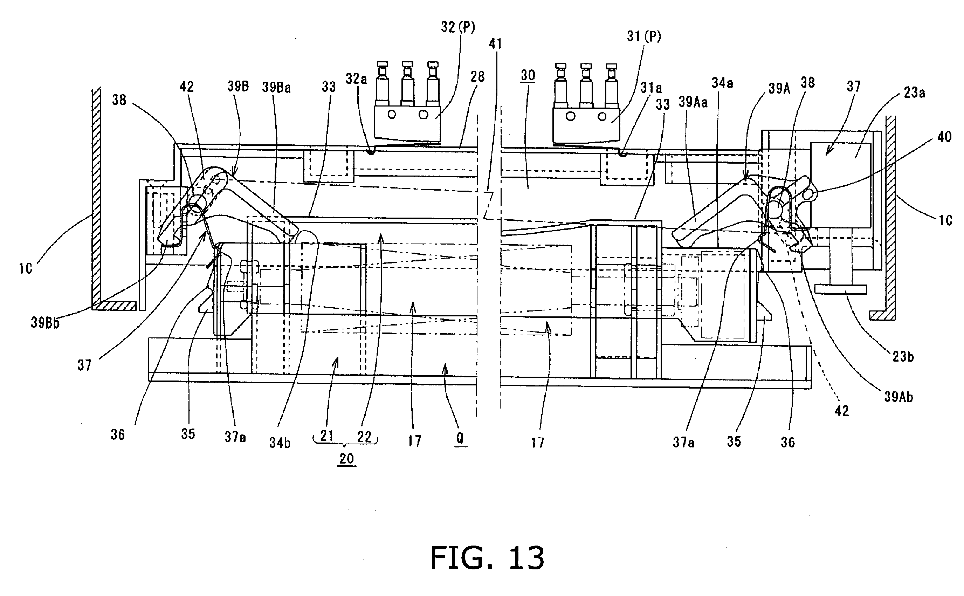

When the pressing part 23b of the pushbutton 23 is pressed from the initial state, first, the locking lever 39A is turned around the fulcrum pin 38 by the movement of the pushbutton 23, the hook 39Ab is released from being interlocked with the catch piece 35 on the side of the dust box 20, and the contact part 39Aa comes into contact with and presses on the lever contact part 34a on the side of the dust box 20, as shown in FIG. 12. Therefore, the brush mechanism Q is pushed out of the storage part 30. In this case, the engaging part 37a of the spring 37 elastically engages with the latching protuberance 36 on the side of the dust box 20, restricting the brush mechanism Q from moving freely. Therefore, when the pushbutton 23 is operated, the brush mechanism Q is prevented from moving all at once and falling out of the storage part 30. Consequently, an operator can then take the brush mechanism Q out by a hand. FIG. 13 shows a state in which the brush mechanism Q has been completely taken out of the storage part 30.

The brush mechanism Q is used to brush dust adhering to the filters 13 during the cleaning operation, and to subsequently repeat this process while the brush mechanism remains mounted in the storage part 30, as described above. When a large amount of dust accumulates in the dust box 20 due to the cleaning operation, the dust box 20 is removed from the storage part 30 as described above to dispose of the dust, and the dust box is then mounted back in the storage part 30.

However, there may be situations in which the operator forgets to put the brush mechanism Q back in after removing the brush mechanism Q, and the air conditioning operation or cleaning operation is performed. There may also be situations in which the brush mechanism Q has been put back in, but either the mounting is incomplete or one of the left and right ends is adequately mounted while the other end is not completely mounted. Switching the air conditioner Z actuated in the air conditioning or cleaning operation under such conditions may, for example, cause the scattering of dust to adversely affect the indoor environment, result in increased noise level, or cause damage to the brush mechanism Q itself, or create other problems, as described above.

In view of this, in this embodiment, limit switches 31, 32 are attached on both the left and right sides of the back wall of the storage part 30. The switches are designed to detect that the brush mechanism Q is mounted in the storage part 30 and that the left and right sides of the brush mechanism Q are both adequately mounted. The limit switches 31, 32 constitute the "mounting detection means P" in the claims section of this application. Contacts 31a, 32a thereof come into contact with the limit contact part 33 on the side of the dust box 20 and output a signal in a state in which the brush mechanism Q is adequately mounted within the storage part 30 (i.e., the contacts detect an adequate mounted state), as shown in FIG. 11. In a state in which the brush mechanism Q is not adequately mounted within the storage part 30 as shown in FIGS. 12 and 13, the contacts 31a, 32a are not in contact with the limit contact part 33 on the side of the dust box 20 and do not output a signal (i.e., the contacts detect that there is no adequate mounted state).

Consequently, a user of the air conditioner Z can confirm the mounted state of the brush mechanism Q and take the necessary measures by perceiving the signal outputs from the limit switches 31, 32 through some means. In this embodiment, the air conditioning and cleaning operations of the air conditioner Z are controlled according to the signals from the limit switches 31, 32. Therefore, control of the air conditioner Z based on the mounted state of the brush mechanism Q is described in detail hereinbelow.

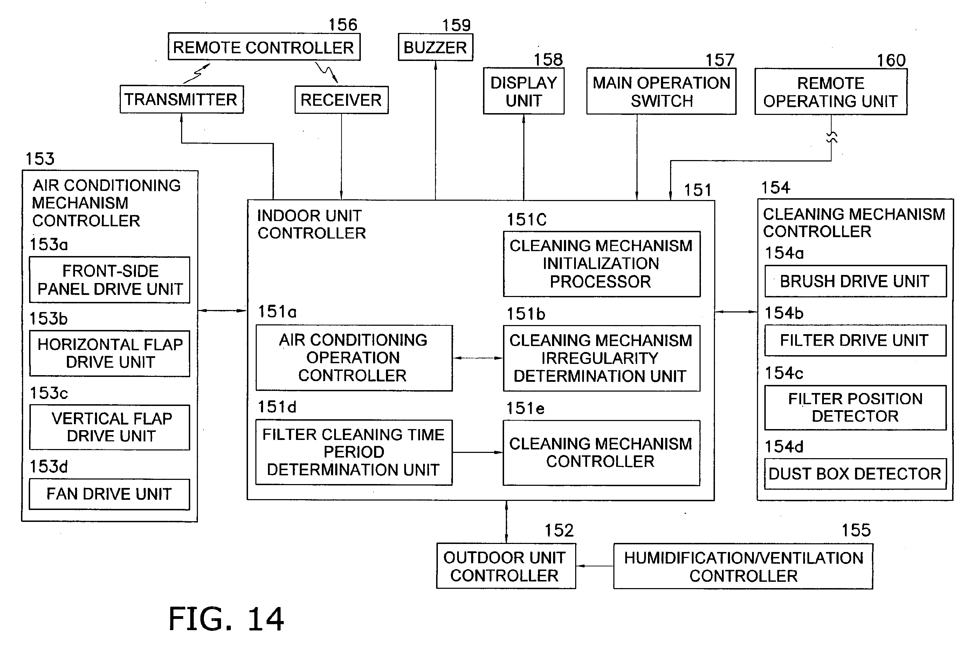

First, the configuration of the control system of the air conditioner Z will be described with reference to FIG. 14.

The air conditioner Z comprises as controllers, an indoor unit controller 151, an outdoor unit controller 152, an air conditioning mechanism controller 153 for controlling the air conditioning mechanism X, a cleaning mechanism controller 154 for controlling the cleaning mechanism Y, and a humidification/ventilation controller 155.

The indoor unit controller 151 is provided with an air conditioning operation controller 151a, a cleaning mechanism irregularity determination unit 151b, a cleaning mechanism initialization processor 151 c, a filter cleaning time period determination unit 151d, and a cleaning mechanism controller 151e.

The air conditioning mechanism controller 153 is provided with a front-side panel drive unit 153a, a horizontal flap drive unit 153b, a vertical flap drive unit 153c, and a fan drive unit 153d.

The cleaning mechanism controller 154 is provided with a brush drive unit 154a, a filter drive unit 154b, a filter position detector 154c, and a dust box detector 154d.

The indoor unit controller 151 is operated by a remote controller 156 and a main operation switch 157, and is equipped with a display unit 158, a buzzer 159, and a remote operating unit 160.

The components in which control problems may be encountered in terms of the relationship with the mounted state of the brush mechanism Q are the indoor unit controller 151, the dust box detector 154d of the cleaning mechanism controller 154, and the display unit 158. Only these components are described herein, and descriptions of the other controllers are omitted.

In this embodiment, the dust box detector 154d detects whether or not the dust box 20 is reliably mounted in an adequate position by the presence or absence of input signals from the limit switches 31, 32.

The cleaning mechanism irregularity determination unit 151b of the indoor unit controller 151 determines irregularities in the cleaning mechanism Y by the presence or absence of an input signal from the dust box detector 154d. When it is determined that there are "no irregularities," the cleaning mechanism controller 151e is permitted to perform the cleaning operation and the air conditioning operation controller 151a is also permitted to perform the air conditioning operation. In this embodiment, either the air conditioning operation or the cleaning operation can be set alternatively, although it is also possible to configure the system according to other embodiments so that both operations can be set simultaneously.

When it is determined that there are "irregularities present," the cleaning mechanism controller 151e is restricted from performing the cleaning operation, and the air conditioning operation controller 151a is restricted from performing the air conditioning operation. In this embodiment, the cleaning mechanism irregularity determination unit 151b is equivalent to the "operation restriction means" and the "operation interruption means" in the claims section of this application.

Notification of an abnormal state is made by the display of the display unit 158, the warning sound of the buzzer 159, the display on the remote operating unit 160, or the like. Specifically, in this embodiment, the display unit 158, the buzzer 159, and the remote operating unit 160 are equivalent to the "irregularity notification means" in the claims section of this application. Other possibilities considered as irregularity notification means in addition to the display unit 158, the buzzer 159, and the remote operating unit 160 include energizing the display, lighting, and other features of these components by using, e.g., a wireless remote controller or a wired remote controller capable of two-way correspondence.

As a result, the air conditioning operation and cleaning operation are reliably prevented from occurring under conditions of cleaning mechanism irregularities, and particularly "brush mechanism Q mounting irregularities."

The irregularity detection is received, the mounted state of the brush mechanism Q is corrected, and the air conditioning operation and cleaning operation are permitted once the brush mechanism is mounted in an adequate state. In particular, the cleaning mechanism Y is reset to the initial state by the cleaning mechanism initialization processor 151 c in a case in which an irregularity having occurred is determined during the cleaning operation.

The cumulative time of the air conditioning operation, for example, is measured by the filter cleaning time period determination unit 151d, and when this time reaches a predetermined time, the cleaning operation is automatically performed by the cleaning mechanism controller 151e.

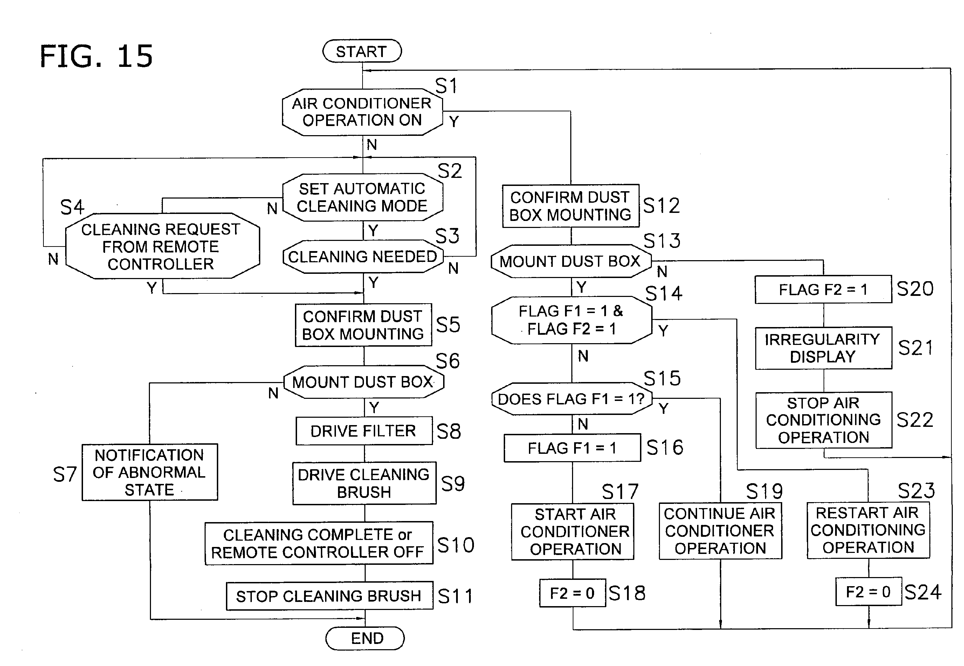

The particulars of the control described above are described in further detail with reference to the flowchart shown in FIG. 15.

After control has been initiated, whether or not the air conditioning operation has been actuated (i.e., whether or not the air conditioning operation has been selected by the main operation switch 157 or the remote controller 156) is first determined in step S1. In cases in which it is determined that the air conditioning operation is not being performed, it is then determined in step S2 whether or not an automatic cleaning mode has been set. In cases in which the automatic cleaning mode has been set, it is determined whether or not there is a need for the cleaning operation (i.e., whether or not a cleaning operation signal has been output from the filter cleaning time period determination unit 151d).

In cases in which it is determined in step S2 that the automatic cleaning mode has not been set, it is determined in step S4 whether or not there is a need for manual cleaning by a manual operation (i.e., an operation of the main operation switch 157 or the remote controller 156).

The mounted state of the dust box 20 is confirmed (steps S5 and S6) prior to initiating the cleaning operation both in cases in which there is a cleaning need in the automatic cleaning mode, and cases in which there is a cleaning need by a manual operation. In cases such as when the dust box 20 is not mounted, or mounted incompletely, the process does not advance to the cleaning operation and ends with the notification of the abnormal state (step S7).

In step S6, the process advances to the cleaning operation only when it is determined that the dust box 20 is adequately mounted or the mounting has been corrected to an adequate state. First, the filters 13 are driven in step S8, the cleaning brush 17 is driven, dust collected on the filters 13 is brushed off by the cleaning brush 17, and the dust collection functionality of the filters 13 is restored.

In step S10, the brushes 19 are stopped (step S11) and the cleaning operation is ended in cases in which cleaning is complete (automatic cleaning mode) or the switch on the remote controller or the like has been set to OFF (the cleaning operation is performed manually).

In step S 1, the mounted state of the dust box 20 is first confirmed (steps S12 and S13) in cases in which it is determined that "the air conditioning operation is ON." Here, a determination is made in step S14 as to whether or not flags F1, F2 are both at "1" in cases in which the dust box 20 is determined to be adequately mounted. Since the flags F1, F2 are initially both at "0," the process advances through step S15 to step S 16, the flag F1 is set to "1," the air conditioning operation is then initiated (step S17), the flag F2 is reset to "0," and the process returns to step S 1.

From the next cycle onward, the air conditioning operation is continued (step S19) via steps S12, S13, S14, and S15. Therefore, the air conditioning operation is continued as long as the air conditioning operation switch is not set to OFF or the dust box 20 is not removed.

In cases such as when the dust box 20 is removed or the adequate mounted state is compromised during the air conditioning operation (step S13), the flag F2 is set to "1" in step S20, an irregularity display is actuated (step S21), and the air conditioning operation is then suspended (step S22).

When the mounted state of the dust box 20 is corrected (step S13), the flags F1, F2 are both set to "1" (step S14). Therefore, the air conditioning operation is restarted (step S23), the flag F2 is set to "0," and the process then returns to step S1.

Although this is an unusual case, when the dust box 20 is not mounted from the beginning (steps S12 and S13), the flag F2 is set to "1" in step S20, the irregularity display is actuated (step S21), and the air conditioning operation is then suspended (step S22).

In this embodiment, an arrangement is adopted in which a notification of the abnormal state is made and the process is ended when the dust box 20 is not mounted as shown in step S7, but the system may instead be configured so that, e.g., the irregularity notification is made in step S7, and the cleaning operation does not begin until the dust box 20 is mounted.

Implementing controls such as those described above makes it possible to reliably prevent undesirable situations in which the air conditioning operation or the cleaning operation is performed while the dust box 20 is not mounted or the mounting is incomplete or inadequate, and the indoor environment is adversely affected by the scattering of dust.

In the embodiment described above, two left and right limit switches 31, 32 are provided to the dust box holder 28 so as to be positioned at the two widthwise ends of the storage part 30, but the present invention is not limited to this option alone, and another possibility is, e.g., to provide one limit switch so as to be positioned in the substantial widthwise middle of the storage part 30.

In the embodiment described above, a wall-mounted air conditioner (indoor unit) was described as an example, but the present invention is not limited to this option alone, and it is apparent that the present invention can also be applied to, e.g., a ceiling- or floor-mounted air conditioner or another type of air conditioner.

## Claims

1. An air conditioner comprising, within a ventilation duct extending from an intake port (3) to a discharge port (4) formed in a casing (1), an air conditioning mechanism (X) in which a heat exchanger (7) and a fan (8) are disposed, and a cleaning mechanism (Y) whereby dust adhered to the surface of plate-shaped filters (13) disposed along the internal surface of the intake port (3) is collected in a dust box (20); wherein:
the dust box (20) is configured to be capable of being attached to and removed from a storage part (30) in the casing (1); and
mounting detection means (P) for detecting that the dust box (20) has been adequately mounted in the storage part (30) are provided between the dust box (20) and the storage part (30).

2. The air conditioner according to claim 1, wherein:
the dust box (20) has an oblong shape so as to be able to correspond with the entire widthwise area of the filters (13); and
the mounting detection means (P) are disposed at both widthwise sides of the dust box (20).

3. The air conditioner according to claim 1 or 2, wherein:
the mounting detection means (P) are configured to output an electrical detection signal when adequate mounting of the dust box (20) is detected.

4. The air conditioner according to any of claims 1 through 3, further comprising:
operation restriction means for restricting the air conditioning operation and/or cleaning operation; and
the operation restriction means being actuated to restrict the start of the air conditioning operation and/or cleaning operation in a case in which the detection signal has not been input from the mounting detection means (P) at the start of the air conditioning operation and/or cleaning operation.

5. The air conditioner according to any of claims 1 through 3, comprising:
irregularity notification means for making notification of irregularities in the mounted state in a case in which the detection signal has not been input from the mounting detection means (P) at the start of the air conditioning operation and/or cleaning operation.

6. The air conditioner according to any of claims 1 through 3, comprising:
operation interruption means for interrupting the air conditioning operation and/or cleaning operation; and
the operation interruption means being actuated to interrupt the air conditioning operation and/or cleaning operation in a case in which the input of detection signal from the mounting detection means (P) ceases during the air conditioning operation and/or cleaning operation.

7. The air conditioner according to any of claims 1 through 3, comprising:
irregularity notification means for making notification of an irregularity in the mounted state in a case in which the input of detection signal from the mounting detection means (P) ceases during the air conditioning operation and/or cleaning operation.

8. The air conditioner according to claim 6 or 7, comprising:
the air conditioning operation and/or cleaning operation being restarted or the irregularity notification being ended when the detection signal is again input from the mounting detection means (P).

9. The air conditioner according to any of claims 1 through 3, comprising:
mounting notification means for notifying that the dust box (20) has been adequately mounted in a case in which the detection signal is output from the mounting detection means (P) following the absence of an output during suspension of the air conditioning operation and/or cleaning operation.
